# EUROPÄISCHE PATENTSCHRIFT

(11) **EP 3 870 648 B1**
(45) Veröffentlichungstag und Bekanntmachung des Hinweises auf die Patenterteilung: **14.08.2024**
(21) Anmeldenummer: 19786828.4
(22) Anmeldetag: 21.10.2019
(51) Int. Cl.: C08L 69/00, C08L 51/06, C08L 23/26, C08K 3/34, C08K 3/013, B29C 64/00, B33Y 70/00

(54) **ADDITIVES FERTIGUNGSVERFAHREN MIT EINEM AUFBAUMATERIAL ENTHALTEND METALLOXID-BESCHICHTETEN GLIMMER**
ADDITIVE PRODUCTION METHOD WITH A STRUCTURAL MATERIAL CONTAINING METAL-OXIDE-COATED MICA
PROCÉDÉ DE FABRICATION ADDITIVE À L'AIDE D'UNE MATIÈRE DE CONSTRUCTION CONTENANT DU MICA REVÊTU D'OXYDE MÉTALLIQUE

(30) Priorität: 26.10.2018 EP 18202734
(43) Veröffentlichungstag der Anmeldung: 01.09.2021
(73) Patentinhaber: Stratasys, Inc., Eden Prairie, MN 55344 (US)
(72) Erfinder: WANDNER, Derk, 51519 Odenthal (DE); LIU, Ting, 50668 Köln (DE); KÜNZEL, Jonas, 51381 Leverkusen (DE)
(74) Vertreter: Davepon, Björn
(86) Internationale Anmeldenummer: PCT/EP2019/078477
(87) Internationale Veröffentlichungsnummer: WO 2020/083800

(56) Entgegenhaltungen:
- EP-A1- 3 395 898
- WO-A1-2013/045552
- WO-A1-2018/149831
- WO-A2-2008/009516

## Beschreibung

Die vorliegende Erfindung betrifft ein Verfahren zur Herstellung eines Gegenstands, umfassend den Schritt der Herstellung des Gegenstands mittels eines additiven Fertigungsverfahrens aus einem Aufbaumaterial, welches ein aromatisches Polycarbonat und Interferenzpigmente und/oder Perlglanzpigmente aus der Gruppe der Metalloxid-beschichteten Glimmer enthält. Die Erfindung betrifft ebenfalls ein durch das Verfahren erhältlichen Gegenstand.

Der Einsatz von Polycarbonaten in additiven Fertigungsverfahren ("3D-Druckverfahren") ist grundsätzlich bekannt. So offenbart WO 2015/077053 A1 einen Gegenstand mit verringerter Dichte umfassend eine thermoplastische Polycarbonat-Zusammensetzung. Der Gegenstand weist eine Dichte (ASTM D792-00) von 80% bis 99%, bezogen auf das Gewicht eines ähnlichen massiven Spritzgusskörpers ohne Hohlräume auf. Weiterhin weist der Gegenstand eine Mikrostruktur, bestimmt durch optische Mikroskopie, mit 1 Volumen-% bis 20 Volumen-% an Hohlräumen auf, wobei wenigstens 80% der Hohlräume solche mit einem großen Verhältnis von Länge zu Breite sind und weniger als 20% der Hohlräume kugelförmige Hohlräume mit einem Durchmesser zwischen 10 und 100 Mikrometern sind. Die thermoplastische Polycarbonat-Zusammensetzung umfasst wenigstens 50 mol-% Bisphenol A und weist ein gewichtsmittleres Molekulargewicht (M_{w}) von 10000 bis 50000 g/mol, eine Glasübergangstemperatur Tg von 130 °C bis 180 °C, einen Gehalt an phenolischen OH-Gruppen von weniger als 50 ppm, einen Halogengruppengehalt von unter 100 ppm und einen Diarylcarbonat-Gehalt von weniger als 1 Gewichts-% auf. Der Gegenstand wird mittels einer Monofilament-basierten additiven Herstellungstechnik gefertigt.

WO 2015/195527 A1 betrifft ein Verfahren zur Herstellung eines thermoplastischen Gegenstands, in dem eine Mehrzahl von Schichten eines thermoplastischen Materials in einem vorbestimmten Muster abgelegt wird, um den Artikel zu bilden. Das thermoplastische Material umfasst eine thermoplastische Zusammensetzung mit einem Schmelzflussindex von 30 Gramm/10 Minuten bis 75 Gramm/10 Minuten gemäß ASTM D1238-04 bei entweder 230 °C und 3.8 kg oder bei 300 °C und 1.2 kg. Das thermoplastische Material kann ein Polycarbonat-Homopolymer, ein Polycarbonat-Copolymer, ein Polyester oder deren Kombination sein.

WO 2015/193818 A1 offenbart ein Verfahren zur Herstellung eines Gegenstands, in dem eine oder mehrere Schichten eines extrudierten Materials im geschmolzenen Zustand in einem vorbestimmten Muster abgelegt werden, wobei wenigstens eine der Schichten aus einem Aufbaumaterial gebildet ist. Das Aufbaumaterial wird einer effektiven Dosis ultravioletter Strahlung ausgesetzt, um eine Quervernetzung innerhalb des Gegenstands auszulösen. Das Aufbaumaterial ist hierbei eine polymere Zusammensetzung, welche ein quervernetzbares Polycarbonat-Harz mit einer von einem Benzophenon abgeleiteten photoaktiven Gruppe enthält.

WO 2012/080397 A2 offenbart eine Infrarotstrahlung-(IR)-absorbierende PolymerZusammensetzung enthaltend einen transparenten thermoplastischen Kunststoff, einen anorganischen Infrarotabsorber, nachfolgend auch als IR-Absorber bezeichnet, optional ein anorganisches nanoskaliges Pigment und die Kombination von mindestens einem organischen Farbmittel spezieller Struktur sowie die Herstellung und Verwendung der Polymer-Zusammensetzungen und die daraus hergestellten Erzeugnisse.

WO 2005/090056 A1 betrifft eine pulverförmige Zusammensetzung zur Verarbeitung in einem Verfahren zum schichtweisen Aufbau von dreidimensionalen Gegenständen mittels Laser, bei dem selektiv Bereiche der jeweiligen Pulverschicht aufgeschmolzen werden, wobei dass das Pulver zumindest ein Polymer und zumindest einen Absorber aufweist, wobei ein Laser mit einer Wellenlänge zwischen 100 und 3000 nm eingesetzt werden kann.

Polycarbonatzusammensetzungen werden teilweise Effektpigmente zugegeben, um das Aussehen der Zusammensetzungen durch winkelabhängige Farbton- und/oder Glanzänderungen zu beeinflussen. Effektpigmente sind plättchenförmig und bewirken eine gerichtete Reflexion und/oder Interferenz. Es gibt verschiedene Gruppen von Effektpigmenten: Metalleffektpigmente, Interferenzpigmente und Perlglanzpigmente, wobei insbesondere die Grenzen zwischen letzteren fließend sein können und diese daher auch zusammenfassend als "spezielle Effektpigmente" bezeichnet werden.

Perlglanzpigmente umfassen transparente Plättchen mit hohem Brechungsindex. Durch Mehrfachreflektion entsteht ein perlenähnlicher Effekt. Die Farbgebung bei Interferenzpigmenten, die sowohl transparent als auch opak sein können, beruht vornehmlich auf Interferenz.

Zu den Perlglanz- und/oder Interferenzpigmenten zählen insbesondere auch Metalloxidbeschichtete Glimmerpigmente, die in verschiedenen Bereichen, etwa für Gehäuse zahlreicher Geräte im Haushalt oder der Unterhaltungselektronik oder als Designelement im Architekturbereich, Anwendung finden. Perlglanzeffekte und /oder Interferenzpigmente dieser Art sind unter Anderem unter den Namen "Magnapearl^{®}" oder "Mearlin^{®}" von der BASF SE oder unter den Namen "Iriodin^{®}" oder "Candurin^{®}" von der Merck SE erhältlich.

Bei Einsatz in Polycarbonat-Zusammensetzungen führen Perlglanzpigmente bzw. Interferenzpigmente aus der Gruppe der Metalloxid-beschichteten Glimmer üblicherweise zu einem signifikanten Abbau des Polycarbonates, was sich in einer Reduzierung des Molekulargewichtes und einer damit verbundenen Reduzierung der Viskosität und damit Erhöhung der Schmelzevolumenfließrate MVR und Verschlechterung der mechanischen Eigenschaften zeigt. Die Abbauprozesse führen außerdem zu einer Verfärbung des Materials.

Bei auf dem Markt befindlichen Zusammensetzungen werden die Abbauprozesse dadurch berücksichtigt, dass Polycarbonat mit höherem Molekulargewicht als für die eigentliche Anwendung benötigt eingesetzt wird. Das Ziel-Molekulargewicht wird dann durch die Compoundier- und Spritzguss- bzw. Extrusionsprozesse bei erhöhter Temperatur erreicht. Auch haben weitere Parameter im Compoundierprozess, wie die Steuerung des Energieeintrages oder die Anordnung der Dosierstelle für das Effektpigment, einen wesentlichen Einfluss auf das sich letztlich ergebende Molekulargewicht des Polycarbonats. Dabei zeigte sich jedoch, dass eine gezielte Steuerung des Molekulargewichts problematisch ist.

Eine grundsätzliche Möglichkeit, den Abbau von Polycarbonat zu minimieren, ist die Verwendung von Thermostabilisatoren. Zur Thermostabilisierung von Polycarbonat werden üblicherweise im Wesentlichen geeignete organische Phosphorverbindungen wie aromatische Phosphine, aromatische Phosphite und organische Antioxidantien, insbesondere sterisch gehinderten Phenole, zugesetzt. Häufig wird die Verwendung von Phosphiten in Kombination mit sterisch gehinderten Phenolen beschrieben, etwa in der EP 0 426 499 A1. Die Stabilisierung nur durch Phosphite ist jedoch im Fall der beschriebenen Effektpigmente nicht ausreichend.

Der thermische Molekulargewichtsabbau von Polycarbonaten ist im Hinblick auf Aufbaumaterialien für additive Fertigungsverfahren von besonderer Relevanz, da das Material mehrfach thermisch belastet wird. So wird beispielsweise für FDM-Verfahren ein extrudiertes Filament bereitgestellt, welches im eigentlichen 3D-Druck dann erneut aufgeschmolzen wird.

Die WO 2018/197572 A1 offenbart eine Zusammensetzung enthaltend A) 50 Gew.-% bis 98,5 Gew.-% aromatisches Polycarbonat und B) 0,8 Gew.-% bis ≤ 3,0 Gew.-% Interferenzpigment und/oder Perlglanzpigment aus der Gruppe der Metalloxid-beschichteten Glimmer und C) 0,05 Gew.-% bis ≤ 3 Gew.-%Anhydrid-modifiziertes α-Olefin-Polymer. Die Anwendung dieses Materials im 3D-Druck wird jedoch nicht beschrieben.

Aus WO 2018/149831 A1 ist ein Verfahren zur Herstellung eines Gegenstands mittels eines additiven Fertigungsverfahrens aus einem Aufbaumaterial bekannt, wobei das Aufbaumaterial ein Polycarbonat mit verbesserter Fließfähigkeit umfasst. Das Aufbaumaterial umfasst 20 - 99,0 Gew.-% eines aromatisches Polycarbonats; 0,0 bis 1,0 Gew.-% eines Flammschutzmittels; 0,0 bis 50,0 Gew.-% einer Komponente ausgewählt aus Glasfasern, Carbonfasern, Carbon-Nanotubes, Graphit, Schlagzähmodifikatoren oder Mischungen aus mindestens zwei hiervon; 0,01 bis 3,0 Gew.-% eines Fließhilfsmittels, ausgewählt aus der Gruppe der Diglycerolester; 0,0 bis 5,0 Gew.-% eines Antitropfmittels; 0,0 bis 1,0 Gew.-% eines Thermostabilitators; und 0,0 bis 10,0 Gew.-% weiterer Additive, wobei sich diese Komponenten des Aufbaumaterials zu ≤ 100 Gew.-% ergänzen.

Polycarbonate haben einen geringen Kristallinitätsgrad, eine vergleichsweise hohe Schmelztemperatur und eine deutlich über Raumtemperatur liegende Glasübergangstemperatur. Diese Kombination der Eigenschaften bringt jedoch spezielle Herausforderungen für den Einsatz von Polycarbonaten in additiven Fertigungsverfahren mit sich. Hierbei handelt es sich insbesondere um die Haftung von einzelnen Strang- oder Partikellagen untereinander.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein additives Herstellungsverfahren anzugeben, mit dem Polycarbonat-basierte Aufbaumaterialien, welche Perlglanz- und/oder Interferenzpigmente enthalten, mit einer zufriedenstellenden Haftung der einzelnen Lagen untereinander verarbeitet werden können.

Erfindungsgemäß gelöst wird die Aufgabe durch ein Verfahren gemäß Anspruch 1. Ein durch das erfindungsgemäße Verfahren erhältlicher Gegenstand ist in Anspruch 13 beansprucht. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Gegenstands umfasst den Schritt der Herstellung des Gegenstands mittels eines additiven Fertigungsverfahrens aus einem Aufbaumaterial, wobei das Aufbaumaterial, bezogen auf das Gesamtgewicht des Aufbaumaterials, A) ≥ 50 Gew.-% bis ≤ 98,5 Gew.-% aromatisches Polycarbonat, B) ≥ 0,8 Gew.-% bis ≤ 3,0 Gew.-% Interferenzpigment und/oder Perlglanzpigment aus der Gruppe der Metalloxid-beschichteten Glimmer und C) >_ 0,05 Gew.-% bis ≤ 3 Gew.-% Anhydrid-modifiziertes α-Olefin-Polymer umfasst, wobei die Summe der Gewichtsprozent-Anteile von A), B) und C) <_ 100 Gew.-% beträgt.

Der herzustellende Gegenstand kann für sich alleine als Ziel des Herstellungsverfahrens dienen. Es ist aber auch möglich, dass der herzustellende Gegenstand Teil eines größeren Verbundes ist und dessen Herstellung einen Teilschritt in der Herstellung des Verbundes darstellt.

Erfindungsgemäß ist vorgesehen, dass der Gegenstand mittels eines additiven Fertigungsverfahrens ("3D-Drucken") aus einem Aufbaumaterial hergestellt wird. Das additive Fertigungsverfahren kann beispielsweise ausgewählt sein aus Schmelzschichtung (Fused Filament Fabrication, FFF oder Fused Deposition Modeling, FDM), Selective Laser Sintering, Selective Laser Melting oder High Speed Sintering.

Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Fasern eingesetzt werden. Maschinen für das FDM/FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind, liegt bevorzugt in einem Bereich von 1 bis 200 mm/s. Die Schichtdicke liegt je nach Anwendungsfall in einem Bereich von 0,025 und 1,25 mm, der Austrittsdurchmesser des Materialstrahls (Düsenauslassdurchmesser) von der Düse beträgt typischerweise mindestens bei 0,05 mm.

Bei der schichtweisen Modellherstellung verbinden sich damit die einzelnen Schichten zu einem komplexen Teil. Der Aufbau eines Körpers erfolgt üblich, indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 200 °C bis 320 °C betragen. Es ist zudem möglich, den Substrattisch und/oder einen gegebenenfalls vorhandenen Bauraum zu beheizen, beispielsweise auf 120 °C bis 250 °C. Hierdurch kann ein zu schnelles Abkühlen der aufgetragenen Schicht verhindert werden, sodass eine weitere, hierauf aufgetragene Schicht sich ausreichend mit der ersten Schicht verbindet.

Sinterverfahren sind im Kontext der vorliegenden Erfindung Verfahren, welche insbesondere thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen. Bevorzugt sind selektive Lasersinterverfahren (SLS).

### Komponente A

Bei Komponente A handelt es sich um aromatisches Polycarbonat. Unter "Polycarbonat" werden erfindungsgemäß sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische DicarbonsäureesterGruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

In einer bevorzugten Ausführungsform umfasst das Aufbaumaterial ein Polycarbonat A), welches ein gewichtsmittleres Molekulargewicht M_{w} von ≥ 10000 bis ≤ 40000 g/mol aufweist. Die Bestimmung des Molekulargewichts erfolgt durch Gelpermeationschromatographie in Methylenchlorid bei 25 °C gegen Polycarbonat-Standards.

Die Bestimmung des Molekulargewichts erfolgt mittels Gelpermeationschromotographie nach DIN 55672-1:2007-08, kalibriert gegen Bisphenol A-Polycarbonat-Standards unter Verwendung von Dichlormethan als Elutionsmittel. Insbesondere liegt M_{w} im Bereich von 10000 g/mol bis 35000 g/mol, vorzugsweise von 12000 g/mol bis 32000 g/mol, weiter bevorzugt von 15000 g/ mol bis 32000 g/mol, insbesondere von 20000 g/mol bis 31500 g/mol. Die Kalibrierung erfolgt mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Dihydroxyarylverbindungen mit beispielsweise Diphenylcarbonat möglich.

Für die Herstellung von Polycarbonaten geeignete Dihydroxyarylverbindungen sind solche der Formel (1)

HO-Z-OH (1),

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 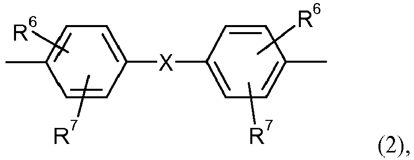 in der
R⁶ und R⁷ unabhängig voneinander für H, C₁- bis Cis-Alkyl-, C₁- bis Cis-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis Cs-Alkyl und ganz besonders bevorzugt für H oder Methyl stehen, und
X für eine Einfachbindung, -SO₂-, -CO-, -O-, -S-, C₁- bis C₆-Alkylen, C₂- bis Cs-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis Cs-Alkyliden, C₅- bis C₆-Cycloalkyliden, -O-, -SO-, -CO-, -S-, -SO₂-
oder für einen Rest der Formel (2a)

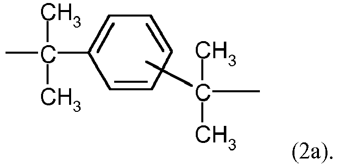

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 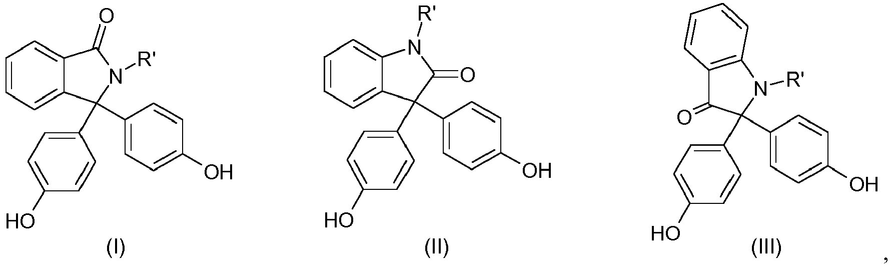 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A sowie die Diphenole der Formeln (I), (II) und (III).

Diese und weitere geeignete Dihydroxyarylverbindungen sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur eine Dihydroxyarylverbindung eingesetzt, im Fall der Copolycarbonate werden mehrere Dihydroxyarylverbindungen eingesetzt. Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Diphenolen der Formeln (I), (II) und/oder (III) 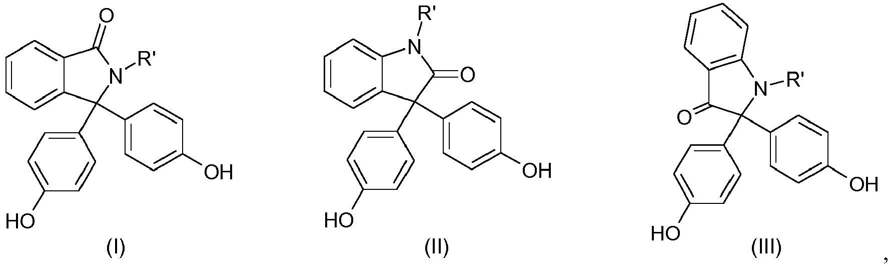 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A.

Zur Einarbeitung von Additiven wird die Komponente A bevorzugt wenigstens teilweise in Form von Pulvern, Granulaten oder Gemischen aus Pulvern und Granulaten eingesetzt.

Das Polycarbonat weist bevorzugt eine MVR von 5 bis 20 cm³/(10 min), weiter bevorzugt von 5,5 bis 12 cm³/(10 min), bestimmt nach ISO 1133:2012-03 bei einer Prüftemperatur von 300 °C und 1,2 kg Belastung, auf.

Als Polycarbonat kann auch eine Mischung aus verschiedenen Polycarbonaten eingesetzt werden, z.B. aus den Polycarbonaten A1 und A2:
Die Menge des aromatischen Polycarbonats A1 beträgt bevorzugt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis von Bisphenol A mit einer bevorzugten Schmelze-Volumenfließrate MVR von 5 bis 15 cm³/10 min, weiter bevorzugt mit einer Schmelze-Volumenfließrate MVR von 6 bis 12 cm³/10 min, bestimmt gemäß ISO 1133 (Prüftemperatur 300°C, Masse 1,2 kg, DIN EN ISO 1133-1:2012-03), ist.

Die Menge des pulverförmigen aromatischen Polycarbonats A2 beträgt bevorzugt, bezogen auf die Gesamtmenge an Polycarbonat, 2,0 bis 12,0 Gew.-%, bevorzugt 3,0 bis 11,0 Gew.-%, besonders bevorzugt 4,0 bis 10,0 Gew.-%, ganz besonders bevorzugt von 5,0 bis 8,0 Gew.-%, wobei dieses aromatische Polycarbonat bevorzugt auf Basis von Bisphenol A mit einer bevorzugten Schmelze-Volumenfließrate MVR von 12 bis 65 cm³/10 min, weiter bevorzugt mit einer Schmelze-Volumenfließrate MVR von 14 bis 32 cm³/10 min, und besonders bevorzugt mit einer Schmelze-Volumenfließrate MVR von 15 bis 20 cm³/10 min ist.

Insgesamt werden im Aufbaumaterial zum Beispiel 50 bis 98,5 Gew.-%, bevorzugt 80 bis 98,0 Gew.-%, weiter bevorzugt 85 bis 97,5 Gew.-%, besonders bevorzugt 90,0 bis 97,5 Gew.-%, ganz besonders bevorzugt 93,0 Gew.-% bis 97,5 Gew.-%, aromatisches Polycarbonat eingesetzt.

### Komponente B

Bei Komponente B handelt es sich um Interferenzpigmente und/oder Perlglanzpigmente aus der Gruppe der Metalloxid-beschichteten Glimmer. Der Glimmer kann natürlich vorkommender oder synthetisch hergestellter Glimmer sein, wobei letzterer aufgrund der üblicherweise höheren Reinheit bevorzugt ist. Glimmer, der aus der Natur gewonnen wird, ist üblicherweise von weiteren Mineralien begleitet. Der Glimmer ist vorzugsweise Muskovit-basiert, d.h. er umfasst bevorzugt mindestens 60 Gew.-%, weiter bevorzugt mindestens 70 Gew.-%, noch weiter bevorzugt mindestens 85 Gew.-%, besonders bevorzugt mindestens 90 Gew. % Muskovit, bezogen auf das Gesamtgewicht des Glimmeranteils - ohne Metalloxid-Beschichtung - des Interferenz- und/oder Perlglanzpigmentes.

Die Metalloxid-Beschichtung umfasst vorzugsweise eine oder mehrere Beschichtungsschichten, enthaltend Titandioxid, Zinnoxid, Aluminiumoxid und/oder Eisenoxid, wobei das Metalloxid weiter bevorzugt Eisen(III)-oxid (Fe₂O₃), Eisen(II, III)-oxid (Fe₃O₄, eine Mischung aus Fe₂O₃ und FeO) und/oder Titandioxid ist, besonders bevorzugt Titandioxid. Die Metalloxid-Beschichtung ist somit ganz besonders bevorzugt eine Titandioxid-Beschichtung.

Der Anteil des Titandioxids am Gesamtgewicht des Pigments beträgt vorzugsweise 30 bis 60 Gew.-%, noch weiter bevorzugt 35 bis 55 Gew.-% und der Anteil des Glimmers vorzugsweise 40 bis 70 Gew.-%, noch weiter bevorzugt 45 bis 65 Gew.-%.

Als Titandioxid sind Rutil und/oder Anatas bevorzugt. In einer weiteren bevorzugten Ausführungsform ist als Perlglanz- und/oder Interferenzpigment B) aus der Gruppe der Metalloxid-beschichteten Glimmer Anatas- oder Rutil-beschichteter Glimmer enthalten.

Bevorzugt sind mindestens 90 Gew.-%, weiter bevorzugt mindestens 95 Gew.-%, noch weiter bevorzugt mindestens 98 Gew.-%, der Pigmentkomponente B Anatas- und/oder Rutil-beschichteter Glimmer.

Um die Verträglichkeit mit der Polymermatrix aus Polycarbonat zu erhöhen, ist das Pigment vorzugsweise zusätzlich mit einer Silikat-Beschichtung versehen, insbesondere einer Sol-Gel-Beschichtung. Dabei wird unter Silikat-Beschichtung erfindungsgemäß insbesondere auch eine Beschichtung aus Siliciumdioxid verstanden. Hierdurch wird üblicherweise gleichzeitig die Wetter- und Chemikalienbeständigkeit des Pigmentes erhöht.

Die mittlere Partikelgröße (D50) des Pigments, bestimmt mittels Laserdiffraktometrie an einer wässrigen Aufschlämmung des Pigments, beträgt bevorzugt zwischen 1 und 100 µm, bei synthetischem Glimmer weiter bevorzugt zwischen 5 bis 80 µm und bei natürlichem Glimmer weiter bevorzugt zwischen 3 und 30 µm, generell bei Glimmer besonders bevorzugt zwischen 3,5 bis 15 µm, ganz besonders bevorzugt 4,0 bis 10 µm, äußerst bevorzugt 4,5 bis 8,0 µm. Der D90-Wert, ebenfalls bestimmt mittels Laserdiffraktometrie an einer wässrigen Aufschlämmung des Pigments, beträgt bei synthetischem Glimmer vorzugsweise von 10 bis 150 µm und bei natürlichem Glimmer vorzugsweise von 5 bis 80 µm. Die Dichte des Pigments beträgt vorzugsweise 2,5 bis 5,0 g/cm³, weiter bevorzugt 2,8 bis 4,0 g/cm³, bestimmt nach DIN EN ISO 1183-1:2013-04.

Der Anteil des mindestens einen Metalloxid-beschichteten Glimmers an der gesamten auf Polycarbonat-basierenden Zusammensetzung beträgt 0,8 Gew.-% bis ≤ 3,0 Gew.-%, bevorzugt 1,0 Gew.-% bis 2,5 Gew.-%, besonders bevorzugt 1,2 Gew.-% bis 2,0 Gew.-%.

### Komponente C

Komponente C ist ein Anhydrid-modifiziertes α-Olefin-Polymer.

Das α-Olefin-Polymer basiert vorzugsweise auf mindestens einem Monomer, ausgewählt aus der Gruppe, bestehend aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen, kann aber auch auf Gemischen aus diesen Monomeren basieren. Weiter bevorzugt basiert das α-Olefin-Polymer auf mindestens einem Monomer, ausgewählt aus der Gruppe, bestehend aus Ethen, Propen, 1-Hexen, 1-Octen. Besonders bevorzugt basiert das α-Olefin-Polymer auf Ethylen, Propen und/oder 1-Octen.

"Basierend auf" bedeutet in diesem Zusammenhang, dass bevorzugt mindestens 90 Gew.-%, weiter bevorzugt mindestens 95 Gew.-%, besonders bevorzugt mindestens 98 Gew.-%, bezogen auf das Gesamtgewicht des jeweiligen α-Olefin-Polymers in der Polycarbonat-haltigen Zusammensetzung, des α-Olefin-Polymers aus dem bzw. den jeweiligen Monomer/Monomeren gebildet sind.

Das α-Olefin-Polymer ist mit einem Anhydrid modifiziert, wobei zur Modifizierung ein ungesättigtes Carbonsäureanhydrid verwendet wird. Das Carbonsäureanhydrid ist vorzugsweise ausgewählt aus der Gruppe, bestehend aus Maleinsäureanhydrid, Phthalsäureanhydrid, Fumarsäureanhydrid, Itaconsäureanhydrid und deren Mischungen. Besonders bevorzugt ist Maleinsäureanhydrid.

In einer bevorzugten Ausführungsform ist das Anhydrid-modifizierte α-Olefin-Polymer C) mit Maleinsäureanhydrid modifiziert und basiert auf Ethen, Propen und/oder 1-Octen.

Das Anhydrid-modifizierte α-Olefin-Polymer ist bevorzugt frei von Styrol-Butadien-Kautschuk, ganz besonders bevorzugt kautschukfrei.

Weiter bevorzugt umfasst Komponente C
C1) 90,0-99,5 Gew.-%, vorzugsweise 92,0-97,5 Gew.-%, weiter bevorzugt 94,0-97,0 Gew.-% α -Olefin-Polymer und
C2) 0,5-10,0 Gew.-%, weiter bevorzugt 2,5-8,0 Gew.-%, noch weiter bevorzugt 3,0-6,0 Gew.-% Anhydrid.

Der olefinische Teil C1) des α-Olefin-Polymers ist ganz besonders bevorzugt dadurch gekennzeichnet, dass
der Ethylen-Anteil 65,0-96,0 Gew.-%, weiter bevorzugt 80,0-96,0 Gew.-%, ganz besonders bevorzugt 84,0-92,0 Gew.-%,
der Propylen-Anteil 2,0-10,0 Gew.-%, ganz besonders bevorzugt 4,0-8,0 Gew.-% und
der 1-Octen-Anteil 2,0-25,0 Gew.-%, weiter bevorzugt 2,0-10,0 Gew.-%, ganz besonders bevorzugt 4,0-8,0 Gew.-%, beträgt.

Ganz besonders bevorzugt basiert das α-Olefin-Polymer auf keinen weiteren Monomeren.

In einer erfindungsgemäßen, aber gegenüber einer Kombination aus Ethen, Propen und 1-Octen weniger bevorzugten Ausführungsform basiert der olefinische Teil C1) des alpha-Olefin-Polymers auf Propylen und/oder Ethylen, in einer anderen Ausführungsform nur auf Propylen, ganz besonders bevorzugt zu mindestens 98 Gew.-%.

Das mittlere Molekulargewicht M_{w} des Anhydrid-modifizierten α-Olefin-Polymers beträgt bevorzugt 300 bis 40000 g/mol, weiter bevorzugt 800 bis 32000 g/mol, noch weiter bevorzugt 1000 bis 15000 g/mol, besonders bevorzugt 1000 bis 8000 g/mol, ganz besonders bevorzugt 3000 bis 6000 g/mol. Das Molekulargewicht M_{w} wird bestimmt mittels Gelpermeationschromatographie in ortho-Dichlorbenzol bei 150 °C mit Polystyrolkalibrierung. Hierbei ist der angegebene Wert bevorzugt der Mittelwert aus einer Doppelbestimmung.

In einer weiteren bevorzugten Ausführungsform weist das Anhydrid-modifizierte α-Olefin-Polymer C) ein mittleres Molekulargewicht M_{w}, bestimmt mittels Gelpermeationschromatographie in ortho-Dichlorbenzol bei 150 °C mit Polystyrolkalibrierung, von ≥ 1000 bis ≤ 15000 g/mol auf.

Ganz besonders bevorzugt basiert das Anhydrid-modifizierte α-Olefin-Polymer gemäß Komponente C auf Ethen, Propen und 1-Octen, ist Maleinsäureanhydrid-modifiziert und weist weiter bevorzugt ein mittleres Molekulargewicht M_{w}, bestimmt mittels Gelpermeationschromatographie in ortho-Dichlorbenzol bei 150 °C mit Polystyrolkalibrierung, von 1000 bis 8000 g/mol, noch weiter bevorzugt 3000 bis 6000 g/mol.

Die Menge an Anhydrid-modifiziertem α-Olefin-Polymer in der Gesamtzusammensetzung beträgt 0,05 Gew.-% bis ≤ 3 Gew.-%, bevorzugt 0,1 Gew.-% bis 2,0 Gew.-%, weiter bevorzugt 0,15 Gew.-% bis 1,5 Gew.-%, besonders bevorzugt 0,2 Gew.-% bis ≤ 1 Gew.-%.

Das Verfahren kann so durchgeführt werden, dass eine Aufbaukammer, in der der Gegenstand aufgebaut wird, nicht mehr oder nur noch weniger beheizt werden muss. Dann lassen sich thermische Bauteilverformungen ("Warping") verringern oder ganz vermeiden.

Zur Einarbeitung von Additiven wird das Polycarbonat-Polymer bevorzugt in Form von Pulvern, Granulaten oder aus Gemischen aus Pulvern und Granulaten eingesetzt. Das Aufbaumaterial kann noch weitere Additive und/oder Füllstoffe (beispielsweise Glas- oder Carbonfasern, Silikate, Talk, Titandioxid, oder Bariumsulfat) Entformungs- und/ oder Flammschutzmittel, organische und anorganische Lichtstreumittel, Stabilisatoren (beispielsweise Thermo- und/oder Lichtstabilisatoren) und dergleichen, aber auch weitere Polymere, enthalten. Der Gesamtgehalt an Additiven im Aufbaumaterial kann beispielsweise ≥ 0.01 Gewichts-% bis ≤ 10 Gewichts-%, bevorzugt ≥ 0.1 Gewichts-% bis ≤ 8 Gewichts-%, besonders bevorzugt 6 Gew.-% betragen. Der Gehalt an Füllstoffen kann beispielsweise ≥ 0.0 Gewichts-% bis ≤ 50 Gewichts-%, bevorzugt ≥ 3 Gewichts-% bis ≤ 40 Gewichts-%, betragen.

In einer weiteren bevorzugten Ausführungsform umfasst das Aufbaumaterial weiterhin D) ≥ 0,001 Gew.-% bis ≤ 0,500 Gew.-%, bezogen auf das Gesamtgewicht des Aufbaumaterials, eines oder mehrerer Phosphor-haltiger Thermostabilisatoren und die Summe der Gewichtsprozent-Anteile von A), B), C) und D) beträgt ≤ 100 Gew.-%.

### Komponente D

Das Aufbaumaterial enthält bevorzugt mindestens einen Phosphor-haltigen Thermostabilisator, weiter bevorzugt einen Phosphin- und/oder Phosphit-haltigen Thermostabilisator. "Phosphorhaltig" bedeutet hierbei, dass Phosphor nicht in irgendeiner Form als bloße Verunreinigung in Komponente D enthalten ist, sondern dass die Strukturformel des Thermostabilisators ein Phosphor-Atom umfasst.

Bevorzugte erfindungsgemäße Zusammensetzungen enthalten mindestens einen Stabilisator auf Phosphinbasis, mindestens einen Stabilisator auf Phosphitbasis und mindestens einen Stabilisator aus der Gruppe der phenolischen Antioxidantien, welche eine besonders gute Stabilisatorkombination darstellen.

Alternativ bevorzugte erfindungsgemäße Zusammensetzungen enthalten mindestens einen Stabilisator auf Phosphinbasis, mindestens einen Stabilisator auf Phosphonitbasis, insbesondere auf Diphosphonitbasis, und mindestens einen Stabilisator aus der Gruppe der phenolischen Antioxidantien.

Die erfindungsgemäßen Zusammensetzungen enthalten vorzugsweise 0,001 bis 0,500 Gew.-%, bevorzugt 0,05 Gew.-% bis 0,270 Gew.-% eines oder mehrerer Phosphor-haltiger Thermostabilisatoren.

Phosphine im Sinne der vorliegenden Erfindung leiten sich von Verbindungen des allgemeinen Typs PₙHₙ₊₂, insbesondere von PH₃ ab, wobei bevorzugt alle Wasserstoffatome gegen aliphatische und/oder aromatische Kohlenwasserstoffreste ersetzt sind, wobei die aromatischen Kohlenwasserstoffreste weitere Substituenten wie zum Beispiel Alkylgruppen, verzweigt und/oder unverzweigt, aufweisen können. Die Phosphine können hierbei ein Phosphor-Atom aufweisen oder aber mehrere, über entsprechende aliphatische und/oder aromatische Kohlenwasserstoffe verbrückte Phosphor-Atome.

Unter Phosphiten im Sinne der vorliegenden Erfindung werden Ester der Phosphonsäure (oft auch als Phosphorigsäureester bezeichnet) mit der allgemeinen Struktur P(OR)₃ verstanden, wobei R für aliphatische und/oder aromatische Kohlenwasserstoffreste steht, wobei die aromatischen Kohlenwasserstoffreste weitere Substituenten wie zum Beispiel Alkylgruppen, verzweigt und/oder unverzweigt, aufweisen können.

Unter Phosphonaten werden von der Grundstruktur R-PO(OH)₂ abgeleitete Verbindungen verstanden, wobei R für aliphatische und/oder aromatische Kohlenwasserstoffreste steht, wobei die aromatischen Kohlenwasserstoffreste weitere Substituenten wie zum Beispiel verzweigte und/oder unverzweigte Alkylgruppen aufweisen können. Die OH-Gruppen der Grundstruktur können teilweise oder vollständig zu OR-Funktionalitäten, wobei R wiederum für aliphatische und/oder aromatische Kohlenwasserstoffreste steht, wobei die aromatischen Kohlenwasserstoffreste weitere Substituenten wie zum Beispiel Alkylgruppen, verzweigt und/oder unverzweigt, aufweisen können, verestert oder teilweise oder vollständig deprotoniert sein, wobei die negative Gesamtladung durch ein entsprechendes Gegenion ausgeglichen wird.

Unter Phosphoniten im Sinne der vorliegenden Erfindung werden Ester, insbesondere Diester der phosphonigen Säure vom Typ R-P(OR)₂ verstanden, wobei R für aliphatische und/oder aromatische Kohlenwasserstoffreste steht, wobei die aromatischen Kohlenwasserstoffreste weitere Substituenten wie zum Beispiel Alkylgruppen, verzweigt und/oder unverzweigt, aufweisen können. Die Phosphonite können hierbei ein Phosphor-Atom aufweisen oder aber mehrere, über entsprechende aliphatische und/oder aromatische Kohlenwasserstoffe verbrückte Phosphor-Atome.

Die Reste R in einer Verbindung können jeweils gleich oder verschieden sein.

Hinsichtlich der Auswahl der Phosphine liegen keine Beschränkungen vor, wobei die Phosphinverbindungen bevorzugt aus der Gruppe ausgewählt sind, die aliphatische Phosphine, aromatische Phosphine und aliphatisch-aromatische Phosphine umfasst.

Die Phosphinverbindungen können primäre, sekundäre und tertiäre Phosphine sein. Bevorzugt werden tertiäre Phosphine eingesetzt, wobei aromatische Phosphine besonders bevorzugt und tertiäre aromatische Phosphine ganz besonders bevorzugt sind.

Bevorzugt werden Triphenylphosphin (TPP), Trialkylphenylphosphin, Bisdiphenylphosphinoethan oder ein Trinaphthylphosphin, wovon Triphenylphosphin (TPP) ganz besonders bevorzugt ist, oder Mischungen dieser Phosphine eingesetzt.

Grundsätzlich können Mischungen aus verschiedenen Phosphinen eingesetzt werden.

Die Herstellung und Eigenschaften von Phosphinverbindungen sind dem Fachmann bekannt und beispielsweise in der EP 0 718 354 A2 und "Ullmanns Enzyklopädie der Technischen Chemie", 4. Aufl., Bd. 18, S. 378-398 und Kirk-Othmer, 3. Aufl., Bd. 17, S. 527-534 beschrieben.

Bei der Einsatzmenge der Phosphinverbindung in der Stabilisatormischung ist zu berücksichtigen, dass unter bestimmten Verarbeitungsbedingungen in Abhängigkeit von Temperatur und Verweilzeit die Substanz oxidiert werden kann. Der oxidierte Anteil steht nicht mehr zur Stabilisierung zur Verfügung. Deshalb sind die Zahl der Verarbeitungsschritte und die jeweiligen Prozessbedingungen zu berücksichtigen. Die Zusammensetzung enthält also nach thermischer Verarbeitung auch immer bestimmte Mengen an oxidiertem Phosphin, insbesondere bevorzugt Triphenylphosphinoxid.

Bevorzugt liegt die Menge an Phosphinstabilisator im Endprodukt bei >0,01 Gew.-%, weiter bevorzugt bei > 0,02 Gew.-%.

Bevorzugt werden den erfindungsgemäßen Zusammensetzungen 0,03 bis 0,500 Gew.-%, weiter bevorzugt 0,04 bis 0,07 Gew.-% Phosphin zugesetzt.

Erhältliche, im Rahmen der vorliegenden Erfindung geeignete Phosphitstabilisatoren sind beispielsweise Irgafos^{®} 168 (Tris(2,4-di-tert-butyl-phenyl)-phosphit / CAS-Nr. 31570-04-4), Irgafos^{®} TPP (CAS-Nr. 101-02-0), ADK PEP Stab 36 (CAS-Nr. 80693-00-1) und Irgafos^{®} TNPP (CAS-Nr. 26523-78-4), wobei Irgafos^{®} 168 besonders bevorzugt ist.

Zur Gruppe der Antioxidantien zählen insbesondere die sterisch gehinderten Phenole. Mögliche sterisch gehinderte Phenole sind zum Beispiel Ester n-Octadecyl-3-(3,5-di-t.butyl-4-hydroxyphenyl)-propionat oder β-(5-tert.-Butyl-4-hydroxy-3-methylphenyl)propionsäure oder β-(3,5-Dicyclohexyl-4-hydroxyphenyl)propionsäure mit ein- oder mehrwertigen Alkoholen, z. B. mit Methanol, Ethanol, Butanol, n-Octanol, i-Octanol, n-Octadecanol. 1,6-Hexandiol, 1,9-Nonandiol, Ethylenglycol, 1,2-Propandiol, Neopentylglycol, Diethylenglycol, Triethylenglycol, Tris-(hydroxyethyl)isocyanurat, N,N'-Bis(Hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

Besonders geeignet wird als sterisch gehindertes Phenol n-Octadecyl-3-(3,5-di-t.butyl-4-hydroxyphenyl)-propionat verwendet. Das sterisch gehinderte Phenol wird bevorzugt in Mengen von 0,01 bis 0,1 Gew.-%, bevorzugt 0,015 bis 0,06 Gew.-%, bezogen auf das Gesamtgewicht der Zusammensetzung, eingesetzt.

Kommerziell erhältliche geeignete phenolische Antioxidantien sind beispielsweise Irganox^{®} 1076 (CAS-Nr. 2082-79-3 / 2,6-Di-tert-butyl-4-(octadecanoxycarbonylethyl)phenol) und Irganox^{®} 1010 (CAS-Nr. 6683-19-8).

Die Stabilisatorkombination enthält vorzugsweise
a) 10 Gew.-% - 89 Gew.-%, weiter bevorzugt 20 Gew.-% - 78 Gew.-%, und besonders bevorzugt 30 Gew.-% - 67 Gew.-% mindestens eines Phosphinstabilisators,
b) 10 Gew.-% - 89 Gew.-%, weiter bevorzugt 20 Gew.-% - 78 Gew.-%, und besonders bevorzugt 30 Gew.-% - 67 Gew.-% mindestens eines Phosphitstabilisators, und
c) 1 Gew.-% - 50 Gew.-%, weiter bevorzugt 2 Gew.-% - 40 Gew.-%, und besonders bevorzugt 3 Gew.-% -20 Gew.-% mindestens eines phenolischen Antioxidans,
wobei sich die Summe der Komponenten a)-c) zu 100 Gew.-% addiert.

In einer besonders bevorzugten Ausführungsform besteht die Stabilisatorkombination aus Triphenylphosphin, Irganox 1076^{®} und Bis(2,6-di-t.butyl-4-methylphenyl)pentaerythrityldiphosphit oder aus Triphenylphosphin, Irganox 1076^{®} und aus Hostanox^{®} P-EPQ^{®}, welches ein Diphosphonit als Hauptkomponente umfasst.

Alternativ zu Irganox 1076^{®} kann Irganox^{®} 1010 (Pentaerythrit- 3-(4-hydroxy-3,5-di-tert-butylphenyl)propionat; CAS-Nr.: 6683-19-8) verwendet werden.

Der Anteil der Stabilisatorkombination an der Gesamtzusammensetzung ist 0,001 Gew.-% - 0,500 Gew.-%, vorzugsweise 0,005 Gew.-% - 0,300 Gew.%, weiter bevorzugt 0,05 bis 0,270 Gew.-%, besonders bevorzugt 0,15 Gew.% - 0,25 Gew.%, bezogen auf das Gesamtgewicht der Zusammensetzung.

In einer bevorzugten Ausführungsform beträgt das Verhältnis von Phosphit-Stabilisator zu phenolischem Antioxidans von 1: 5 bis 10:1, weiter bevorzugt von 1:5 bis 5:1 und besonders bevorzugt 4:1.

In einer weiteren bevorzugten Ausführungsform beträgt das Verhältnis von Phosphin (a) zum Gemisch aus Phosphit und phenolischen Antioxidans (b+c) bevorzugt 8: 1 bis 1 : 9, weiter bevorzugt 1:5 bis 5:1 wobei das Verhältnis von Phosphit-Stabilisator (b) zu phenolischem Antioxidans (c) von 1: 5 bis 10:1, weiter bevorzugt von 1:5 bis 5:1 und besonders bevorzugt 4:1 beträgt.

Um die thermoplastische Matrix zu stabilisieren, können weitere Phosphor-basierte Stabilisatoren eingesetzt werden, solange diese den Effekt der oben beschriebenen Stabilisierung nicht negativ beeinflussen.

In einer weiteren bevorzugten Ausführungsform umfasst das Aufbaumaterial weiterhin E) > 0 Gew.-% bis ≤ 7 Gew.-%, bezogen auf das Gesamtgewicht des Aufbaumaterials, weitere Additive, ausgewählt aus der Gruppe bestehend aus Flammschutzmitteln, Antitropfmitteln, von Komponente D) verschiedenen Thermostabilisatoren, Schlagzähmodifikatoren, Füllstoffen, Antistatika, Farbmitteln, von Komponente B verschiedenen Pigmenten, auch umfassend Ruß, Gleitmitteln, Entformungsmitteln, Hydrolysestabilisatoren, Verträglichkeitsvermittlern, UV-Absorbern und/oder IR-Absorbern und die Summe der Gewichtsprozent-Anteile von A), B), C), D) und E) beträgt ≤ 100 Gew.-%.

### Komponente E

Das Aufbaumaterial kann als weitere Additive noch ein oder mehrere der für Polycarbonat-Zusammensetzungen üblichen Additive wie Flammschutzmittel, Antitropfmittel, Schlagzähmodifikatoren, Füllstoffe, Antistatika, Farbmittel, von Komponente B verschiedene Pigmente, auch umfassend Ruß, von Komponente D verschiedene Thermostabilisatoren, Gleit- und/oder Entformungsmittel, UV-Absorber, IR-Absorber, Hydrolysestabilisatoren und/oder Verträglichkeitsvermittler enthalten. Die Gruppe der weiteren Additive umfasst keine Pigmente gemäß Komponente B, d.h. keine Perlglanz- und/oder Interferenzpigmente aus der Gruppe der Metalloxid-beschichteten Glimmer, und keine Anhydrid-modifizierten α-Olefin-Polymere, da diese als Komponente C bezeichnet sind. Außerdem umfasst die Gruppe der weiteren Additive gemäß Komponente E keine Phosphor-haltigen Thermostabilisatoren, da diese bereits durch die ggf. vorhandene Komponente D erfasst sind.

Die Menge an weiteren Additiven beträgt bevorzugt bis zu 5 Gew.-%, besonders bevorzugt 0,01 bis 3 Gew.-%, ganz besonders bevorzugt bis zu 1 Gew.-%, bezogen auf die Gesamtzusammensetzung.

Besonders geeignete Entformungsmittel für die erfindungsgemäßen Zusammensetzungen sind Pentaerythrittetrastearat (PETS) oder Glycerinmonostearat (GMS), deren Carbonate und/oder Mischungen dieser Entformungsmittel.

Farbmittel oder Pigmente im Sinne der vorliegenden Erfindung gemäß Komponente E sind beispielsweise Schwefel-haltige Pigmente wie Cadmium Red und Cadmium Gelb, Eisencyanidbasierte Pigmente wie Berliner Blau, Oxid-Pigmente wie Titandioxid, Zinkoxid, rotes Eisenoxid, schwarzes Eisenoxid, Chromoxid, Titangelb, Zink-Eisen-basiertes Braun, Titan-Cobalt-basiertes Grün, Cobaltblau, Kupfer-Chrom-basiertes Schwarz und Kupfer-Eisen-basiertes Schwarz oder Chrom-basierte Pigmente wie Chromgelb, Phthalocyanin-abgeleitete Farbstoffe wie Kupfer-Phthalocyanin Blau und Kupfer-Phthalocyanin Grün, kondensierte polycyclische Farbstoffe und Pigmente wie Azo-basierte (z.B. Nickel-Azogelb), Schwefel-Indigo-Farbstoffe, Perinon-basierte, Perylen-basierte, Chinacridon-abgeleitete, Dioxazin-basierte, Isoindolinon-basierte und Chinophthalon-abgeleitete Derivate, Anthrachinon-basierte, heterocyclische Systeme, jedenfalls keine Perlglanzpigmente und/oder Interferenzpigmente aus der Gruppe der Metalloxid-beschichteten Glimmer.

Konkrete Beispiele für Handelsprodukte sind z.B. MACROLEX^{®} Blau RR, MACROLEX^{®} Violett 3R, MACROLEX^{®} EG, MACROLEX^{®} Violett B (Lanxess AG, Deutschland), Sumiplast^{®} Violett RR, Sumiplast^{®} Violett B, Sumiplast^{®} Blau OR, (Sumitomo Chemical Co., Ltd.), Diaresin^{®} Violett D, Diaresin^{®} Blau G, Diaresin^{®} Blau N (Mitsubishi Chemical Corporation), Heliogen^{®} Blau oder Heliogen^{®} Grün (BASF AG, Deutschland).

Von diesen sind Cyaninderivate, Chinolinderivate, Anthrachinonderivate, Phthalocyaninderivate bevorzugt.

Als Ruße kommen vorzugsweise nanoskalige Ruße, weiter bevorzugt nanoskalige Farbruße, zum Einsatz. Bevorzugt besitzen diese eine mittlere Primärpartikelgröße, bestimmt durch Rasterelektronenmikroskopie, von weniger als 100 nm, bevorzugt von 10 bis 99 nm, weiter bevorzugt von 10 bis 50 nm, besonders bevorzugt von 10 bis 30 nm, insbesondere von 10 bis 20 nm. Die feinteiligen Farbruße sind besonders bevorzugt.

Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS^{®}, als nass-verarbeitete Pellets unter den Namen ELFTEX^{®}, REGAL^{®} und CSX^{®}, und in einer flockigen Erscheinungsform unter MONARCH^{®}, ELFTEX^{®}, REGAL^{®} und MOGUL^{®} - erhältlich, alle von Cabot Corporation. Insbesondere bevorzugt sind Ruße, die unter dem Handelsnamen BLACK PEARLS^{®} (CAS-Nr. 1333-86-4) gehandelt werden.

Optional enthält die Zusammensetzung einen Ultraviolett-Absorber. Geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in EP 0 839 623 A1, WO 1996/15102 A2 und EP 0 500 496 A1 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Folgende Ultraviolett-Absorber sind beispielsweise geeignet: Hydroxy-Benzotriazole, wie 2-(3',5'-Bis-(1,1-dimethylbenzyl)-2'-hydroxy-phenyl)-benzotriazol (Tinuvin^{®} 234, BASF AG. Ludwigshafen), 2-(2'-Hydroxy-5'-(tert.-octyl)-phenyl)-benzotriazol (Tinuvin^{®} 329, BASF AG. Ludwigshafen), 2-(2'-Hydroxy-3'-(2-butyl)-5'-(tert.butyl)-phenyl)-benzotriazol (Tinuvin^{®} 350, BASF AG. Ludwigshafen), Bis-(3-(2H-benztriazolyl)-2-hydroxy-5-tert.-octyl)methan, (Tinuvin^{®} 360, BASF AG. Ludwigshafen), (2-(4,6-Diphenyl-1,3,5-triazin-2-yl)-5-(hexyloxy)-phenol (Tinuvin^{®} 1577, BASF AG. Ludwigshafen), die Benzophenone 2,4-Dihydroxy-benzophenon (Chimasorb^{®} 22 , BASF AG. Ludwigshafen) oder 2-Hydroxy-4-(octyloxy)-benzophenon (Chimassorb^{®} 81, BASF AG. Ludwigshafen), 2-Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, BASF AG. Ludwigshafen) oder Tetraethyl-2,2'-(1,4-phenylen-dimethyliden)-bismalonat (Hostavin^{®} B-Cap, Clariant AG). Es können auch Mischungen dieser Ultraviolett-Absorber eingesetzt werden.

Geeignete IR-Absorber sind beispielsweise in EP 1 559 743 A1, EP 1 865 027 A1, DE 10 022 037 A1 und DE 10 006 208 A1 offenbart. Von den in der zitierten Literatur genannten IR-Absorbern sind solche auf Borid- und Wolframatbasis, insbesondere Cäsiumwolframat oder Zink-dotiertes Cäsiumwolframat, sowie auf ITO und ATO basierende Absorber sowie Kombinationen daraus bevorzugt.

Als Schlagzähmodifikatoren können übliche Schlagzähmodifikatoren enthalten sein. Diese Gruppe umfasst sowohl Kern/Schale-basierte Systeme wie ABS, MBS, Acryl-basierte, Silikon-Acryl-basierte Schlagzähmodifikatoren, aber auch nicht Kern-Schale-basierte Schlagzähmodifikatoren.

Der Polycarbonat-Zusammensetzung können organische und anorganische Füllstoffe in üblichen Mengen zugesetzt werden. In Frage kommen hierfür prinzipiell alle feinvermahlenen organischen und anorganischen Materialien. Diese können z.B. partikel-, schuppenförmigen oder faserförmigen Charakter haben. Beispielhaft seien an dieser Stelle Kreide, Quarzpulver, Titandioxid, Silikate/Aluminosilikate wie z.B. Talk, Wollastonit, Montmorillonit, insbesondere auch in einer durch Ionenaustausch modifizierten, organophilen Form, Kaolin, Zeolithe, Vermiculit sowie Aluminiumoxid, Silica, Magnesiumhydroxid und Aluminiumhydroxid genannt. Es können auch Mischungen verschiedener anorganischer Materialien zum Einsatz kommen.

Bevorzugte anorganische Füllstoffe sind feinstteilige (nanoskalige) anorganische Verbindungen aus einem oder mehreren Metallen der 1. bis 5. Hauptgruppe und 1. bis 8. Nebengruppe des Periodensystems, bevorzugt aus der 2. bis 5. Hauptgruppe, besonders bevorzugt auf der 3. bis 5. Hauptgruppe, bzw. auf der 4. bis 8. Nebengruppe, mit den Elementen Sauerstoff, Schwefel, Bor, Phosphor, Kohlenstoff, Stickstoff, Wasserstoff und/oder Silicium.

Bevorzugte Verbindungen sind beispielsweise Oxide, Hydroxide, wasserhaltige/basische Oxide, Sulfate, Sulfite, Sulfide, Carbonate, Carbide, Nitrate, Nitrite, Nitride, Borate, Silikate, Phosphate und/oder Hydride.

Als Antitropfmittel wird bevorzugt Polytetrafluoroethylen (PTFE) verwendet.

Erfindungsgemäß besonders bevorzugte Aufbaumaterialien sind solche, enthaltend
A) 90,0 Gew.-% bis 97,5 Gew.-%, bevorzugt 93,0 Gew.-% bis 97,5 Gew.-%, aromatisches Polycarbonat, bevorzugt mit einer MVR von 5 bis 20 cm³/(10 min), bestimmt nach ISO 1133:2012-03 bei einer Prüftemperatur von 300 °C und 1,2 kg Belastung,
B) 1,0 bis 2,5 Gew.-%, bevorzugt 1,2 bis 2,0 Gew.-% Perlglanzpigment und/oder Interferenzpigment aus der Gruppe der mit Titandioxid beschichteten Glimmer, besonders bevorzugt umfassend mindestens 98 Gew.-% Anatas-beschichteten Glimmer,
C) 0,1 Gew.-% bis 2,0 Gew.-% Anhydrid-modifiziertes α-Olefin-Polymer, bevorzugt auf Basis von Ethen, Propen und/oder 1-Octen, besonders bevorzugt Maleinsäureanhydrid-modifiziert,
D) 0,001 Gew.-% bis 0,500 Gew.-%, bevorzugt 0,05 bis 0,270 Gew.-%, eines oder mehrerer Phosphor-haltiger Thermostabilisatoren, bevorzugt umfassend
   i) Phosphin, Phosphit und phenolisches Antioxidans oder
   ii) Phosphin, Phosphonit und phenolisches Antioxidans,
E) bis zu 7 Gew.-%, bevorzugt bis zu 5 Gew.-%, besonders bevorzugt 0,1 bis 3 Gew.-%, ganz besonders bevorzugt bis zu 1 Gew.-% weitere Additive, äußerst bevorzugt ausgewählt aus der Gruppe, bestehend aus Flammschutzmitteln, Antitropfmitteln, Schlagzähmodifikatoren, Füllstoffen, Antistatika, Farbmitteln, von Komponente B verschiedenen Pigmenten, auch umfassend Ruß, von Komponente D verschiedenen Thermostabilisatoren, Gleit- und/oder Entformungsmitteln, Hydrolysestabilisatoren, Verträglichkeitsvermittlern, UV-Absorbern und/oder IR-Absorbern.

"Bis zu" umfasst erfindungsgemäß jeweils den sich diesen Worten anschließenden Wert als Obergrenze.

Dabei besteht die Gruppe der weiteren Additive gemäß Komponente E ganz besonders bevorzugt nur aus Farbmitteln, Entformungsmitteln, von Komponente B verschiedenen Pigmenten, insbesondere Ruß, und/oder von Komponente D verschiedenen Thermostabilisatoren.

Erfindungsgemäß ganz besonders bevorzugte Aufbaumaterialien enthalten
A) 90,0 Gew.-% bis 97,5 Gew.-% aromatisches Polycarbonat, bevorzugt mit einer MVR von 5 bis 18 cm³/(10 min), bestimmt nach ISO 1133:2012-03 bei einer Prüftemperatur von 300 °C und 1,2 kg Belastung,
B) 1,2 bis 2,0 Gew.-%, bevorzugt 1,5 bis 2,0 Gew.-% Perlglanz- und/oder Interferenzpigment aus der Gruppe der mit Titandioxid beschichteten Glimmer, äußerst bevorzugt umfassend mindestens 98 Gew.-% Anatas-beschichteten Glimmer,
C) 0,2 Gew.-% bis ≤ 1 Gew.-% Anhydrid-modifiziertes α-Olefin-Polymer auf Basis von Ethen, Propen und 1-Octen, besonders bevorzugt Maleinsäureanhydrid-modifiziert, äußerst bevorzugt mit einem M_{w} von 3000 g/mol bis 6000 g/mol, bestimmt mittels Gelpermeationschromatographie in ortho-Dichlorbenzol bei 150 °C mit Polystyrolkalibrierung,
D) 0,05 Gew.-% bis 0,270 Gew.-%, äußerst bevorzugt 0,15 Gew.-% bis 0,25 Gew.-%, eines oder mehrerer Phosphor-haltiger Thermostabilisatoren, umfassend, äußerst bevorzugt bestehend aus
   i) Phosphin, Phosphit und phenolisches Antioxidans oder
   ii) Phosphin, Phosphonit und phenolisches Antioxidans,
E) bis zu 7 Gew.-%, bevorzugt bis zu 3 Gew.-%, äußerst bevorzugt bis zu 1 Gew.-%, weiteren Additiven, äußerst bevorzugt ausgewählt aus der Gruppe, bestehend aus Farbmitteln, Gleitmitteln, Entformungsmitteln, von Komponente B verschiedenen Pigmenten, insbesondere Ruß, und/oder von Komponente D verschiedenen Thermostabilisatoren.

Äußerst bevorzugt enthalten die Aufbaumaterialien keine weiteren Komponenten.

In einer weiteren bevorzugten Ausführungsform umfasst die Herstellung des Gegenstands mittels des additiven Fertigungsverfahrens die Schritte:
- Auftragen einer Schicht aus, das Aufbaumaterial aufweisenden, Partikeln auf eine Zielfläche;
- Einwirken von Energie auf einen ausgewählten Teil der Schicht, entsprechend einem Querschnitt des Gegenstands, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Bestrahlen durchgeführt werden.

Es ist bevorzugt, dass mindestens 90 Gewichts-% der Partikel einen Teilchendurchmesser von ≤ 0,25 mm, bevorzugt ≤ 0,2 mm, besonders bevorzugt ≤ 0,15 mm aufweisen. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:
- Bestrahlen eines ausgewählten Teils der Schicht, entsprechend einem Querschnitt des Gegenstandes, mit einem Energiestrahl, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 µm. Der Laser kann als Halbleiterlaser oder als Gaslaser ausgeführt sein. Denkbar ist auch ein Elektronenstrahl. Vorzugsweise erfolgt das Einwirken von Energie mittels eines IR-Lasers, so dass auch das erfindungsgemäß vorgesehene zumindest zeitweise Aussetzen des Aufbaumaterials mit Infrarot-Strahlung im Wellenlängenbereich zwischen 600 nm und 1700 nm hierdurch verwirklicht wird.

In einer weiteren bevorzugten Ausführungsform umfasst die Herstellung des Gegenstands mittels des additiven Fertigungsverfahrens die Schritte:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

Bei dieser Ausführungsform handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 1 bis ≤ 20 Wiederholungen für das Auftragen durchgeführt werden.

Die einzelnen Filamente, welche aufgetragen werden, können einen Durchmesser von ≥ 30 µm bis ≤ 2000 µm aufweisen, bevorzugt ≥ 40 µm bis ≤ 1000 µm und besonders bevorzugt ≥ 50 µm bis ≤ 500 µm.

Der erste Schritt dieser Ausführungsform des Verfahrens betrifft den Aufbau der ersten Lage auf einen Träger. Anschließend wird der zweite Schritt so lange ausgeführt, in dem auf zuvor aufgetragene Lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen. Es ist aber möglich, dass nur eine Lage des Aufbaumaterials auf einen Träger aufgetragen wird. In dieser Ausführungsform wird vorzugsweise die jeweils zuletzt aufgetragene Schicht des Aufbaumaterials durch eine IR-Strahlungsquelle wie einem Nernst-Stift, Globar, Chromnickellegierungen, Quecksilberhochdrucklampen oder Wolframlampen der erfindungsgemäß vorgesehenen IR-Strahlung ausgesetzt.

In einer weiteren bevorzugten Ausführungsform wird das Verfahren innerhalb eines Bauraums durchgeführt und die Temperatur des Bauraums ist ≥ 10 °C (bevorzugt >_ 25 °C, mehr bevorzugt >_ 50 °C) geringer als die Glasübergangstemperatur T_{g} des Aufbaumaterials (bestimmt durch DSC gemäß ISO 11357-2:2013-05 bei einer Heizrate von 10 °C/min). Damit ist besonders bei komplexen und großen Bauteilen mit langer Fertigungszeit eine deutlich geringere thermische Belastung und bessere Maßhaltigkeit des Bauteils verbunden. In Pulversinterverfahren können die Pulver bei deutlich geringerer Bauraumtemperatur verarbeitet werden. Somit kann ein ungewolltes Versintern von Pulver unterhalb der (aktivierten) Oberfläche vermieden werden.

In einer weiteren bevorzugten Ausführungsform ist die Oberflächentemperatur einer in dem additiven Fertigungsverfahren zuletzt aufgetragenen Lage des Aufbaumaterials größer oder gleich einer Temperatur, welche in einer dynamisch-mechanischen Analyse des Aufbaumaterials (gemäß ISO 6721-10:2015-09 bei einer Kreisfrequenz von 1/s) einem Schnittpunkt einer gedachten Geraden in dem Abschnitt der Kurve des Speichermoduls E', welche einem glasartigen Zustand des Aufbaumaterials entspricht, und einer gedachten Gerade in dem Abschnitt der Kurve des Speichermoduls E', in der der Speichermodul E' abfällt und einen Glasübergang anzeigt, entspricht. Diese Temperatur wird in der Literatur auch als "Onset"-Temperatur bei der Bestimmung der Glasübergangstemperatur anhand der E'-Kurve in einer dynamisch-mechanischen Analyse bezeichnet.

In einer weiteren bevorzugten Ausführungsform nimmt während des Verfahrens die Temperatur des abgelegten Aufbaumaterials von der Oberfläche hin zu tieferen Schichten ab. So hat in einer besonders bevorzugten Ausführungsform die zehnte Schicht unterhalb der obersten Schicht eine Temperatur, die ≤ 3 °C bevorzugt ≤ 5° C und besonders bevorzugt <_ 8 °C unterhalb der Temperatur der obersten Lage liegt.

In einer weiteren bevorzugten Ausführungsform wird eine Mehrzahl von Aufbaumaterialien eingesetzt und wenigstens eines der Aufbaumaterialien ist wie vorstehend ausgeführt definiert. Vorzugsweise enthält mindestens eines der Aufbaumaterialien nicht die Komponente B) und das Aufbaumaterial mit der Komponente B) wird zu einem Informationsmerkmal verarbeitet.

Ein weiterer Aspekt der vorliegenden Erfindung ist ein Gegenstand, erhalten durch ein erfindungsgemäßes Verfahren, wobei der Gegenstand wenigstens teilweise aus einem Aufbaumaterial wie vorstehend ausgeführt definiert hergestellt ist und wobei der Gegenstand in Aufbaurichtung des in seiner Herstellung eingesetzten additiven Herstellungsverfahrens eine Zugfestigkeit (ISO 527:2012-02) aufweist, welche ≥ 30% (bevorzugt ≥ 40%, mehr bevorzugt ≥ 50%) bis < 100% der Zugfestigkeit (ISO 527:2012-02) eines spritzgegossenen Probenkörpers aus dem gleichen Aufbaumaterial beträgt. Diese Zugfestigkeiten im additiv gefertigten Gegenstand betreffen somit die Haftung einzelner Lagen des Aufbaumaterials zueinander.

In einer bevorzugten Ausführungsform umfasst der Gegenstand eine Mehrzahl von Aufbaumaterialien, mindestens eines der Aufbaumaterialien enthält nicht die Komponente B) und das Aufbaumaterial, welches wie vorstehend ausgeführt definiert ist, liegt in Form eines Informationsmerkmals vor. Das Informationsmerkmal kann zum Beispiel eine Produktkennzeichnung oder eine Fälschungssicherung sein. Dieses kann in Form von Barcodes oder QR-Codes umgesetzt sein. Hierzu muss das Informationsmerkmal nicht an der äußeren Oberfläche des Gegenstands liegen, sondern kann auch im Gegenstand eingebettet sein. Für die Eignung als Informationsmerkmal kann man die Tatsache nutzen, dass die Pigmente der Komponente B) im Röntgenbild, im Terahertz-Scanner oder auch beim Durchscheinen von intensivem Licht ein anderes Absorptionsverhalten als nicht-pigmenthaltiges Aufbaumaterial aufweisen.

In einer weiteren bevorzugten Ausführungsform ist der Gegenstand ein Gehäuse, eine Prothese, ein Lampenschirm, ein Reflektor oder eine dekorative Blende.

### Beispiele

Im Folgenden wird, ohne darauf beschränkt zu sein, die Erfindung anhand von Ausführungsbeispielen näher beschrieben. Die hier beschriebenen Bestimmungsmethoden finden Anwendung für alle korrespondierenden Größen in der vorliegenden Erfindung zur kommen, sofern nichts Gegenteiliges beschrieben worden ist.

Für die Schlagzähigkeits-Prüfungen nach Charpy (ISO 179 1 e U) wurden Flachstäbe mit den Abmessungen 80 mm x 10 mm x 4 mm im FDM-Verfahren hergestellt. Herstellungsbedingungen: Düsendurchmesser: 0,4 mm; Druckgeschwindigkeit: 38 mm/s; Schichtdicke: 0,2 mm; Düsentemperatur: 295 °C; Druckbetttemperatur: 100 °C. Die Messungen erfolgten bei 23 °C.

Für die Zugversuche gemäß ISO 527-2:2012-02 wurden entsprechende S2-Prüfkörper ebenfalls im FDM-Verfahren hergestellt. Die Aufbaurichtung ist hierbei jeweils die Z-Richtung.

Die Bestimmung des Molekulargewichts erfolgte mittels Gelpermeationschromotographie nach DIN 55672-1:2007-08, kalibriert gegen Bisphenol A-Polycarbonat-Standards unter Verwendung von Dichlormethan als Elutionsmittel nach der Methode 2301-0257502-09D (aus dem Jahre 2009 in deutscher Sprache) der Currenta GmbH & Co. OHG, Leverkusen; Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Das Aufbaumaterial für Versuch Nr. 1-1 hatte die folgende Zusammensetzung: 97,51 Gew.-% eines aromatischen Polycarbonats mit einem Mw von ca. 24000 g/mol, 0,08 Gew.-% eines Phosphit-Thermostabilisators, 0,02 Gew.-% eines phenolischen Antioxidans, 0,4 Gew.-% eines mit Maleinsäureanhydrid modifizierten Polyolefins, 1,94 Gew.-% Effektpigment basierend auf mit TiO₂ und Fe₂O₃ beschichtetem Glimmer und 0,05% Gew.-% organische Farbmittelzusammensetzung.

Das Aufbaumaterial für den Vergleichsversuch Nr. V-1 hatte die folgende Zusammensetzung: 97,48 Gew.-% eines aromatischen Polycarbonats mit einem Mw von ca. 31000 g/mol, 0,4 Gew.-% eines organischen Gleit- und Entformungsmittels, 1,94 Gew.-% Effektpigment basierend auf mit TiO₂ beschichtetem Glimmer und 0,18 Gew.-% organische Farbmittelzusammensetzung.

Das Aufbaumaterial für Versuch Nr. 2-1 hatte die folgende Zusammensetzung: 97,38 Gew.-% eines aromatischen Polycarbonats mit einem Mw von ca. 31000 g/mol, 0,08 Gew.-% eines Phosphit-Thermostabilisators, 0,02 Gew.-% eines phenolischen Antioxidans, 0,4 Gew.-% eines mit Maleinsäureanhydrid modifizierten Polyolefins, 1,94 Gew.-% Effektpigment basierend auf mit TiOz beschichtetem Glimmer und 0,18 Gew.-% organische Farbmittelzusammensetzung.

| **Versuch Nr.** | | **1-1** | **1-1** | **1-1** | **VI** | **VI** | **VI** | **2-1** | **2-1** | **2-1** |
|---|---|---|---|---|---|---|---|---|---|---|
| | | | | | | | | | | |
| Untersuchungs-Ebene des Prüfkörpers | | X/Y | Y/Z | Z/Y | X/Y | Y/Z | Z/Y | X/Y | Y/Z | Z/Y |
| Prüfung | Einheit | | | | | | | | | |

| **Charpy** | | | | | | | | | | |
|---|---|---|---|---|---|---|---|---|---|---|
| Anzahl der Prüfkörper: Gebrochen/ Nicht gebrochen | | 5/0 | 5/0 | 5/0 | 5/0 | 5/0 | 5/0 | 3/2 | 3/2 | 5/0 |
| Mittelwert der gebrochenen Prüfkörper | kJ/m² | 76 | 138 | 9 | 46 | 69 | 8 | 66 | 165 | 10 |

| **Zugversuch** | | | | | | | | | | |
|---|---|---|---|---|---|---|---|---|---|---|
| E-Modul | N/mm² | 1510 | | 923 | 1720 | | 1060 | 2070 | | 1300 |
| **Zugfestigkeit** | N/mm² | 42 | | 17 | 49 | | 22 | 57 | | 28 |
| Bruchdehnung | % | 6,5 | | 3,1 | 8,5 | | 3 | 8,5 | | 3,1 |

| **GPC von Materialproben der Prüfkörper** | | | | | | | | | | |
|---|---|---|---|---|---|---|---|---|---|---|
| Mₙ | g/mol | | | 10320 | | | 10110 | | | 11650 |
| M_{w} | g/mol | | | 23810 | | | 28170 | | | 31160 |
| M_{z} | g/mol | | | 38420 | | | 47560 | | | 51090 |
| M_{w}/Mₙ | | | | 2,30 | | | 2,78 | | | 2,67 |

Man erkennt, dass bei erfindungsgemäßen Prüfkörpern eine deutliche Reduktion des Polymerabbaus erreicht werden konnte. Die mit den neuen Stabilisatoren ausgestatteten Rezepturen zeigen nahezu keinen Abbau trotz mehrmaligem Aufschmelzen. Auch zeigt sich eine deutlich erhöhte Zähigkeit bei den erfindungsgemäßen Rezepturen im Vergleich zur Standardrezeptur.

## Patentansprüche

1. Verfahren zur Herstellung eines Gegenstands, umfassend den Schritt der Herstellung des Gegenstands mittels eines additiven Fertigungsverfahrens aus einem Aufbaumaterial,
**dadurch gekennzeichnet, dass**
das Aufbaumaterial, bezogen auf das Gesamtgewicht des Aufbaumaterials,
A) ≥ 50 Gew.-% bis ≤ 98,5 Gew.-% aromatisches Polycarbonat,
B) ≥ 0,8 Gew.-% bis ≤ 3,0 Gew.-% Interferenzpigment und/oder Perlglanzpigment aus der Gruppe der Metalloxid-beschichteten Glimmer und
C) ≤ 0,05 Gew.-% bis ≤ 3 Gew.-% Anhydrid-modifiziertes α-Olefin-Polymer umfasst, wobei die Summe der Gewichtsprozent-Anteile von A), B) und C) ≤ 100 Gew.-% beträgt.

2. Verfahren gemäß einem der Ansprüche 1, wobei das Aufbaumaterial A) ein Polycarbonat umfasst, welches ein gewichtsmittleres Molekulargewicht M_{w} von ≥ 10000 bis ≤ 40000 g/mol, bestimmt durch Gelpermeationschromatographie in Methylenchlorid bei 25 °C gegen Polycarbonat-Standards, aufweist.

3. Verfahren gemäß Anspruch 2, wobei als Perlglanz- und/oder Interferenzpigment B) aus der Gruppe der Metalloxid-beschichteten Glimmer Anatas- oder Rutil-beschichteter Glimmer enthalten ist.

4. Verfahren gemäß einem der Ansprüche 1 bis 3, wobei das Anhydrid-modifizierte α-Olefin-Polymer C) mit Maleinsäureanhydrid modifiziert ist und auf Ethen, Propen und/oder 1-Octen basiert.

5. Verfahren gemäß einem der Ansprüche 1 bis 4, wobei das Anhydrid-modifizierte α-Olefin-Polymer C) ein mittleres Molekulargewicht M_{w}, bestimmt mittels Gelpermeationschromatographie in ortho-Dichlorbenzol bei 150 °C mit Polystyrolkalibrierung, von ≥ 1000 bis ≤ 15000 g/mol und eine Säurezahl von ≥ 45 bis ≤ 170 mg KOH/g, bestimmt gemäß DIN ISO 17025:2018-03 mittels potentiometrischer Titration, aufweist.

6. Verfahren gemäß einem der Ansprüche 1 bis 5, wobei das Aufbaumaterial weiterhin
D) ≥ 0,001 Gew.-% bis ≤ 0,500 Gew.-%, bezogen auf das Gesamtgewicht des Aufbaumaterials, eines oder mehrerer Phosphor-haltiger Thermostabilisatoren umfasst
und die Summe der Gewichtsprozent-Anteile von A), B), C) und D) ≤ 100 Gew.-% beträgt.

7. Verfahren gemäß einem der Ansprüche 1 bis 6, wobei das Aufbaumaterial weiterhin
E) > 0 Gew.-% bis ≤ 7 Gew.-%, bezogen auf das Gesamtgewicht des Aufbaumaterials, weitere Additive, ausgewählt aus der Gruppe bestehend aus Flammschutzmitteln, Antitropfmitteln, von Komponente D) verschiedenen Thermostabilisatoren, Schlagzähmodifikatoren, Füllstoffen, Antistatika, Farbmitteln, von Komponente B verschiedenen Pigmenten, auch umfassend Ruß, Gleitmitteln, Entformungsmitteln, Hydrolysestabilisatoren, Verträglichkeitsvermittlern, UV-Absorbern und/oder IR-Absorbern, umfasst
und die Summe der Gewichtsprozent-Anteile von A), B), C), D) und E) ≤ 100 Gew.-% beträgt.

8. Verfahren gemäß einem der Ansprüche 1 bis 7, wobei die Herstellung des Gegenstands mittels des additiven Fertigungsverfahrens die Schritte umfasst:
- Auftragen einer Schicht aus, das Aufbaumaterial aufweisenden, Partikeln auf eine Zielfläche;
- Einwirken von Energie auf einen ausgewählten Teil der Schicht, entsprechend einem Querschnitt des Gegenstands, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

9. Verfahren gemäß einem der Ansprüche 1 bis 7, wobei die Herstellung des Gegenstands mittels des additiven Fertigungsverfahrens die Schritte umfasst:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

10. Verfahren gemäß einem der Ansprüche 1 bis 9, wobei das Verfahren innerhalb eines Bauraums durchgeführt wird und die Temperatur des Bauraums ≥ 10 °C geringer ist als die Glasübergangstemperatur T_{g} des Aufbaumaterials (bestimmt durch DSC gemäß ISO 11357-2:2013-05 bei einer Heizrate von 10 °C/min).

11. Verfahren gemäß einem der Ansprüche 1 bis 10, **dadurch gekennzeichnet, dass** die Oberflächentemperatur einer in dem additiven Fertigungsverfahren zuletzt aufgetragenen Lage des Aufbaumaterials größer oder gleich einer Temperatur ist, welche in einer dynamisch-mechanischen Analyse des Aufbaumaterials (gemäß ISO 6721-10:2015-09 bei einer Kreisfrequenz von 1/s) einem Schnittpunkt einer gedachten Geraden in dem Abschnitt der Kurve des Speichermoduls E', welche einem glasartigen Zustand des Aufbaumaterials entspricht, und einer gedachten Gerade in dem Abschnitt der Kurve des Speichermoduls E', in der der Speichermodul E' abfällt und einen Glasübergang anzeigt, entspricht.

12. Verfahren gemäß einem der Ansprüche 1 bis 11, wobei eine Mehrzahl von Aufbaumaterialien eingesetzt wird und wenigstens eines der Aufbaumaterialien gemäß einem der Ansprüche 1 bis 7 definiert ist.

13. Gegenstand, erhältlich durch ein Verfahren gemäß einem der Ansprüche 1 bis 12, **dadurch gekennzeichnet, dass** der Gegenstand wenigstens teilweise aus einem Aufbaumaterial, welches gemäß einem der Ansprüche 1 bis 7 definiert ist, hergestellt ist und wobei der Gegenstand in Aufbaurichtung des in seiner Herstellung eingesetzten additiven Herstellungsverfahrens eine Zugfestigkeit (ISO 527:2012-02) aufweist, welche ≥ 30% bis < 100% der Zugfestigkeit (ISO 527:2012-02) eines spritzgegossenen Probenkörpers aus dem gleichen Aufbaumaterial beträgt.

14. Gegenstand gemäß Anspruch 13, wobei der Gegenstand eine Mehrzahl von Aufbaumaterialien umfasst, mindestens eines der Aufbaumaterialien nicht die Komponente B) enthält und das Aufbaumaterial, welches gemäß einem der Ansprüche 1 bis 7 definiert ist, in Form eines Informationsmerkmals als Produktkennzeichnung oder Fälschungssicherung vorliegt.

15. Gegenstand gemäß Anspruch 13 oder 14, wobei der Gegenstand ein Gehäuse, eine Prothese, ein Lampenschirm, ein Reflektor oder eine dekorative Blende ist.

## Claims

1. Method of producing an article, comprising the step of producing the article by means of an additive manufacturing method from a build material, **characterized in that**
the build material, based on the total weight of the build material, comprises
A) ≥ 50% by weight to ≤ 98.5% by weight of aromatic polycarbonate,
B) ≥ 0.8% by weight to ≤ 3.0% by weight of interference pigment and/or pearlescent pigment from the group of metal oxide-coated micas and
C) ≥ 0.05% by weight to ≤ 3% by weight of anhydride-modified α-olefin polymer,
where the sum total of the percentages by weight of A), B) and C) is ≤ 100% by weight.

2. Method according to Claim 1, wherein the build material A) comprises a polycarbonate having a weight-average molecular weight M_{w} of ≥ 10 000 to ≤ 40 000 g/mol, determined by gel permeation chromatography in methylene chloride at 25°C against polycarbonate standards.

3. Method according to Claim 2, wherein the pearlescent pigment and/or interference pigment B) from the group of the metal oxide-coated micas present is anatase- or rutile-coated mica.

4. Method according to any of Claims 1 to 3, wherein the anhydride-modified α-olefin polymer C) has been modified with maleic anhydride and is based on ethene, propene and/or 1-octene.

5. Method according to any of Claims 1 to 4, wherein the anhydride-modified α-olefin polymer C) has an average molecular weight M_{w}, determined by means of gel permeation chromatography in ortho-dichlorobenzene at 150°C with polystyrene calibration, of ≥ 1000 to ≤ 15 000 g/mol and an acid number of ≥ 45 to ≤ 170 mg KOH/g, determined to DIN ISO 17025:2018-03 by means of potentiometric titration.

6. Method according to any of Claims 1 to 5, wherein the build material further comprises
D) ≥ 0.001% by weight to ≤ 0.500% by weight, based on the total weight of the build material, of one or more phosphorus-containing thermal stabilizers, and the sum total of the percentages by weight of A), B), C) and D) is ≤ 100% by weight.

7. Method according to any of Claims 1 to 6, wherein the build material further comprises
E) > 0% by weight to ≤ 7% by weight, based on the total weight of the build material, of further additives selected from the group consisting of flame retardants, anti-dripping agents, thermal stabilizers other than component D), impact modifiers, fillers, antistats, colorants, pigments other than component B, also including carbon black, lubricants, demoulding agents, hydrolysis stabilizers, compatibilizers, UV absorbers and/or IR absorbers, and the sum total of the percentages by weight of A), B), C), D) and E) is ≤ 100% by weight.

8. Method according to any of Claims 1 to 7, wherein the production of the article by the additive manufacturing method comprises the steps of:
- applying a layer of particles including the build material to a target surface;
- introducing energy into a selected portion of the layer corresponding to a cross section of the article such that the particles in the selected portion are bonded;
- repeating the steps of applying and introducing energy for a multitude of layers, such that the bonded portions of the adjacent layers become bonded in order to form the article.

9. Method according to any of Claims 1 to 7, wherein the production of the article by the additive manufacturing method comprises the steps of:
- applying a filament of an at least partly molten build material to a carrier, such that a layer of the build material is obtained, corresponding to a first selected cross section of the article;
- applying a filament of the at least partly molten build material to a previously applied layer of the build material, such that a further layer of the build material is obtained, which corresponds to a further selected cross section of the article and which is bonded to the layer applied beforehand;
- repeating the step of applying a filament of the at least partly molten build material to a previously applied layer of the build material until the article has been formed.

10. Method according to any of Claims 1 to 9, wherein the method is conducted within a build chamber and the temperature of the build chamber is ≥ 10°C lower than the glass transition temperature T_{g} of the build material (determined by DSC to ISO 11357-2:2013-05 at a heating rate of 10°C/min).

11. Method according to any of Claims 1 to 10, **characterized in that** the surface temperature of a layer of the build material applied last in the additive manufacturing method is not less than a temperature which, in a dynamic-mechanical analysis of the build material (to ISO 6721-10:2015-09 at an angular frequency of 1/s), corresponds to a point of intersection of a theoretical straight line in the section of the curve of the storage modulus E' corresponding to a vitreous state of the build material and a theoretical straight line in the section of the curve of the storage modulus E' in which the storage modulus E' declines and indicates a glass transition.

12. Method according to any of Claims 1 to 11, wherein a multitude of build materials is used, and at least one of the build materials is defined according to any of Claims 1 to 7.

13. Article obtainable by a method according to any of Claims 1 to 12, **characterized in that** the article is at least partly produced from a build material which is defined according to any of Claims 1 to 7, and wherein the article, in build direction of the additive manufacturing method used in the production thereof, has a tensile strength (ISO 527:2012-02) of ≥ 30% to < 100% of the tensile strength (ISO 527:2012-02) of an injection-moulded test specimen made of the same build material.

14. Article according to Claim 13, wherein the article comprises a multitude of build materials, at least one of the build materials does not comprise component B), and the build material which is defined according to any of Claims 1 to 7 takes the form of an information feature as product identifier or antiforgery feature.

15. Article according to Claim 13 or 14, wherein the article is a housing, a prosthesis, a lampshade, a reflector or a decorative cover.

## Revendications

1. Procédé de fabrication d'un objet, comprenant l'étape de fabrication de l'objet par un procédé de fabrication additive à partir d'un matériau de construction,
**caractérisé en ce que**
le matériau de construction comprend, par rapport au poids total du matériau de construction,
A) ≥ 50 % en poids à ≤ 98,5 % en poids d'un polycarbonate aromatique,
B) ≥ 0,8 % en poids à ≤ 3,0 % en poids d'un pigment interférentiel et/ou d'un pigment nacré du groupe des micas revêtus d'un oxyde métallique et
C) ≥ 0,05 % en poids à ≤ 3 % en poids d'un polymère d'α-oléfine modifié par un anhydride,
la somme des pourcentages en poids de A), B) et C) étant ≤ 100 % en poids.

2. Procédé selon la revendication 1, dans lequel le matériau de construction A) comprend un polycarbonate qui présente une masse moléculaire moyenne en masse M_{w} de ≥ 10 000 à ≤ 40 000 g/mol, déterminée par chromatographie par perméation de gel dans du chlorure de méthylène à 25 °C contre un étalon polycarbonate.

3. Procédé selon la revendication 2, dans lequel le pigment nacré et/ou interférentiel B) du groupe des micas revêtus d'un oxyde métallique contiennent un mica revêtu d'anatase ou de rutile.

4. Procédé selon l'une des revendications 1 à 3, dans lequel le polymère d'α-oléfine modifié par un anhydride C) est modifié par de l'anhydride maléique et est à base d'éthène, de propène et/ou de 1-octène.

5. Procédé selon l'une des revendications 1 à 4, dans lequel le polymère d'α-oléfine modifié par un anhydride C) présente une masse moléculaire moyenne en masse M_{w}, déterminée par chromatographie par perméation de gel dans de l'ortho-dichlorobenzène à 150 °C avec étalonnage au polystyrène, de ≥ 1 000 à ≤ 15 000 g/mol et un indice d'acide de ≥ 45 à ≤ 170 mg KOH/g, déterminé selon DIN ISO 17025:2018-03 par titrage potentiométrique.

6. Procédé selon l'une des revendications 1 à 5, dans lequel le matériau de construction comprend en outre
D) ≥ 0,001 % en poids à ≤ 0,500 % en poids, par rapport au poids total du matériau de construction, d'un ou plusieurs thermostabilisants phosphorés,
et la somme des pourcentages en poids de A), B), C) et D) étant ≤ 100 % en poids.

7. Procédé selon l'une des revendications 1 à 6, dans lequel le matériau de construction comprend en outre
E) > 0 % en poids à ≤ 7 % en poids, par rapport au poids total du matériau de construction, d'autres additifs choisis dans le groupe consistant en les agents d'ignifugation, les anti-gouttes, les thermostabilisants différents du composant D), les modifiants choc, les matières de charge, les antistatiques, les colorants, les pigments différents du composant B, comprenant aussi du noir de carbone, des agents de glissement, des agents de démoulage, des stabilisants vis-à-vis de l'hydrolyse, des agents de compatibilisation, des absorbants UV et/ou des absorbants IR,
et la somme des pourcentages en poids de A), B), C), D) et E) étant ≤ 100 % en poids.

8. Procédé selon l'une des revendications 1 à 7, dans lequel la fabrication de l'objet par le procédé de fabrication additive comprend les étapes suivantes :
- application d'une couche de particules comportant le matériau de construction sur une surface cible ;
- application d'énergie sur une partie sélectionnée de la couche, correspondant à une section transversale de l'objet, de façon que les particules s'assemblent dans la partie sélectionnée ;
- répétition des étapes d'application et d'application d'énergie pour un grand nombre d'étapes, de façon que les parties assemblées des couches voisines s'assemblent pour former l'objet.

9. Procédé selon l'une des revendications 1 à 7, dans lequel la fabrication de l'objet par le procédé de fabrication additive comprend les étapes suivantes :
- application d'un filament d'un matériau de construction au moins partiellement fondu sur un support, de façon à obtenir une couche du matériau de construction, qui correspond à une première section transversale sélectionnée de l'objet ;
- application d'un filament du matériau de construction au moins partiellement fondu sur une couche appliquée au préalable du matériau de construction, de façon à obtenir une couche supplémentaire du matériau de construction, qui correspond à une section transversale sélectionnée supplémentaire de l'objet, et qui est assemblée à la couche précédemment appliquée ;
- répétition de l'étape d'application d'un filament du matériau de construction au moins partiellement fondu sur une couche préalablement appliquée du matériau de construction, jusqu'à formation de l'objet.

10. Procédé selon l'une des revendications 1 à 9, le procédé étant mis en oeuvre dans un espace de construction, et la température de l'espace de construction étant de ≥ 10 °C inférieure à la température de transition vitreuse T_{g} du matériau de construction (déterminée par ACD selon ISO 11357-2:2013-05 pour une vitesse de montée en température de 10 °C/min).

11. Procédé selon l'une des revendications 1 à 10, **caractérisé en ce que** la température de surface d'une couche du matériau de construction finalement appliquée dans le procédé de fabrication additive est supérieure ou égale à une température qui, dans une analyse dynamique-mécanique du matériau de construction (selon ISO 6721-10:2015-09 à une fréquence angulaire de 1/s), correspond à un point d'intersection d'une droite imaginaire dans le segment de la courbe du module de conservation E' qui correspond à un état vitreux du matériau de construction, et d'une droite imaginaire dans le segment de la courbe du module de conservation E' dans laquelle le module de conservation E' diminue et indique une transition vitreuse.

12. Procédé selon l'une des revendications 1 à 11, dans lequel un grand nombre de matériaux de construction sont utilisés, et au moins l'un des matériaux de construction est défini selon l'une des revendications 1 à 7.

13. Objet pouvant être obtenu par un procédé selon l'une des revendications 1 à 12, **caractérisé en ce que** l'objet est au moins partiellement fabriqué à partir d'un matériau de construction qui est défini selon l'une des revendications 1 à 7, et l'objet présentant, dans la direction de construction du procédé de fabrication additive utilisé pour sa fabrication, une résistance à la traction (ISO 527:2012-02) qui est ≥ 30 % à < 100 % de la résistance à la traction (ISO 527:2012-02) d'une éprouvette moulée par injection en le même matériau de construction.

14. Objet selon la revendication 13, l'objet comprenant un grand nombre de matériaux de construction, au moins l'un des matériaux de construction ne contenant pas le composant B), et le matériau de construction qui est défini selon l'une des revendications 1 à 7 se présentant sous forme d'un élément d'information, en tant que caractéristique d'un produit ou protection contre une falsification.

15. Objet selon la revendication 13 ou 14, l'objet étant un boîtier, une prothèse, un abat-jour, un réflecteur ou un écran décoratif.
